# EUROPEAN PATENT SPECIFICATION

(11) **EP 1 567 438 B1**
(45) Date of publication and mention of the grant of the patent: **16.01.2008**
(21) Application number: 03758172.5
(22) Date of filing: 28.10.2003
(51) Int. Cl.: B65H 19/30, B65G 47/88, B65G 47/74

(54) **METHOD AND APPARATUS FOR THE HANDLING OF ROLLS**
VERFAHREN UND VORRICHTUNG ZUR HANDHABUNG VON WALZEN
PROCEDE ET DISPOSITIF DE MANIPULATION DE ROULEAUX

(30) Priority: 05.11.2002 FI 20021978
(43) Date of publication of application: 31.08.2005
(73) Proprietor: Raumaster Paper Oy, 26100 Rauma (FI)
(72) Inventor: SONNINEN, Seppo, FIN-26840 Kortela (FI); LAMMI, Matti, FIN-28450 Vanha-Ulvila (FI)
(86) International application number: PCT/FI2003/000800
(87) International publication number: WO 2004/041696

(56) References cited:
- EP-A1- 0 705 783
- WO-A1-98/41461
- US-A- 4 632 633
- US-A- 5 314 295
- PATENT ABSTRACTS OF JAPAN vol. 015, no. 422 (M-1173) 25 October 1991 & JP 03 177 254 A (SUMITOMO HEAVY IND LTD) 01 August 1991

## Description

The present invention relates to a method and an apparatus for controlled handling of paper, pulp and cardboard rolls moved by rolling, when pushed into motion, transferred between stations and received at one or more stop positions.

At paper, pulp and cardboard mills, the product, which during most of the process is in the form of a roll, is generally moved by rolling. Often the rolling takes place on an inclined surface, utilizing gravity. Along the way there may be a number of stop positions, where operations relating to separation, sorting, storage, quality control, chopping, packaging etc. are performed.

Repeated phases of operation in transfer systems based on rolling are those of pushing the roll to set it moving, control of the rolling motion and gentle reception at the stop position. For these functions, numerous solutions have been developed, some of which are described in the following patent specifications.

FI 104367 B describes a solution which can be used both as a pushing means and as a stopping means. The electric power means is not sensitive to temperature variations and, being provided with sufficient automation, allows individual treatment of rolls of different weights.

FI 920517 and US 531429 disclose more sophisticated pneumatic roll stopping devices. With these devices, gentle stopping can be achieved, but the programs and control systems are complicated. Further solutions are described in patent specification FI 91315 and in patent application FI 922795.

A comprehensive list of reference specifications relating to control of rolling is given in patent specification FI 96757.

Intermediate stoppers/sorting stoppers are often used in parallel configurations comprising up to several tens of stoppers. Therefore, expensive stoppers like those described above are hardly eligible. One solution is described in patent specification FI 97126, in which the adaptation for rolls of different weights is accomplished via adjustment of pneumatic pressure. Hydraulic stoppers are also generally used. US company Lamb-Grays Harbor Co. has developed an stopper based on a hydraulic shock absorber.

The cheapest intermediate stopper solution, i.e. pneumatic flaps without impact absorption, is rough and causes rebounce of the roll.

Known intermediate/sorting stoppers typically recede under the rolling ramp, where it is necessary to provide an appropriate space for the stopper and the required impact absorption systems, where the stoppers can also be adjusted and serviced.

The roll weights vary from a few hundred kilograms to several tons. Controlling loads varying within such wide limits by the same stopper is a difficult task. From the above-mentioned patent specifications it can be seen how complicated the solutions required may be.

To keep the kinetic energy of the roll within reasonable limits, the angle of inclination of the rolling ramp is minimized. This leads to slowness and uncertainty at the start of the motion, and the roll may also stop before the actual stop position. In this case, the operator has to assist manually, which is expensive and hazardous.

From the above comments it is evident that the numerous operations of pushing the rolls to start them moving and especially of arresting them are a significant cost factor. The simplest stoppers cause quality problems. The most sophisticated ones are expensive and their automatic features and/or adjustments are difficult to control.

The method and apparatus of the invention provide an advantageous solution in applications where a roll / roll set is pushed into motion and stopped a plurality of times within a reasonable distance.

The invention is characterized in that a roll / roll set can be set in motion and stopped in a controlled manner at several positions and conveyed between these. The invention is based on a multi-function apparatus, which is preferably provided with the best possible automatic features, i.e. features producing the smoothest acceleration and deceleration. Even so, the cost per action position remains low.
As the unit controlling the rolling movement takes the roll / roll set at an optimal speed to an stopper array, it is possible to use economically priced sorting stoppers that need not be provided with impact absorption.
No other stoppers receding under the rolling ramp are needed. This is of importance especially when the operations are performed near the floor level. Expensive installations below the floor level can be minimized.

The rolling ramp can be implemented with sufficient inclination as the rolls can be controlled by a contact element / contact elements even throughout the rolling process. The transfer takes place securely, fast and still in a gentle manner.

In systems already in use, there often appears a need to make changes in them afterwards. In the case of the system of the invention, many changes can be easily implemented. In many cases it is sufficient to move/add sensors along with a change in software.
In respect of flexibility, the solution can be compared to an industrial robot.

In the following, the invention will be described in detail with reference to the attached drawings.

Fig. 1 presents a partially sectioned side view of an embodiment of the invention fitted in connection with a winder.

Fig. 2 presents an embodiment of a contact element according to the invention in side view.

Fig. 3 presents a second embodiment of a contact element according to the invention in side view.

Fig. 4 presents a third embodiment of contact elements according to the invention in side view.

Fig. 5 presents an embodiment of the invention in top view.

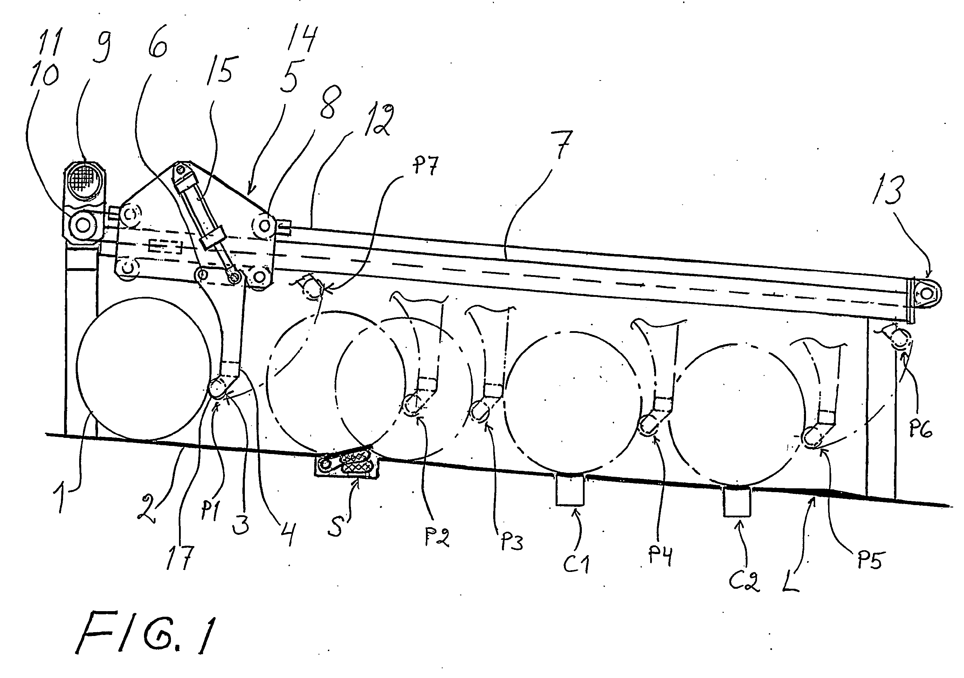

Fig. 1 presents a system according to the invention, applied in connection with a ramp to whose upper end a winder pushes a set 1 of rolls slit by it. The roll set 1 rolls along the inclined ramp surface 2, meeting a contact element 3, which has already been set in motion in the same direction and which is part of the apparatus to be described hereinafter. For the sake of simplicity, number 1 is used to refer to both an individual paper/pulp/cardboard roll and a set of such rolls.

The contact element 3 is mounted on a bracket 4, which is connected to carriages 5 via joints 6. The carriages 5 move on bearing wheels 8 along guide beams 7. The operating power for the carriages 5 is obtained from a power means 9, preferably a geared motor, engaging a shaft 10.

Mounted on the shaft 10, which is supported with bearings at one end of the guide beams 7, are transmission sprockets 11. Mounted with bearings at the other ends are deflecting pulleys 13. Power transmission is preferably implemented using cogged belts 12, whose ends are secured to the carriages 5 and which pass around the transmission sprockets 11 and the deflecting pulleys 13. Instead of a cogged belt, it is naturally possible to use a chain, and likewise it is also possible to use a rack and pinion arrangement. As for the power means 9, there are several alternatives from hydraulic motor to electric servomotor. In practice, an electric motor provided with an inverter is the most suitable solution: it is reliable, of economical price and allows sufficiently smooth operation.

The apparatus comprises two carriages 5, two guide beams 7 and two belt drives 11, 12, 13, one of each being disposed on either side of the rolling area, preferably above the rolls 1. The structures in question are known in themselves e.g. from gantry robots.

The combination of the carriages 5, the bracket 4 and the contact element 3 forms a unit controlling the rolling motion and is abbreviated as control unit 14.

In a working scheme according to the application, the positions of the contact element 3 at different stages are referred to as P1 - P7. The process may be e.g. as follows.

When receiving a roll set 1 at position P1, the control unit 14 recedes in front of the roll set 1 at a speed lower than that of the roll set 1, which therefore meets the control unit 14. The control system adjusts the speed/torque values of the power means 9 so as to ensure that the contact element 3 can not at any stage exert on the roll set 1 a force that would damage the surface layers. When necessary, the control unit 14 decelerates down to a halt and leaves the rolls, e.g. every second roll, to be separated from the set by stoppers in a sorting stopper array S (=P2). The control unit 14 stops the other rolls at position P3 at a distance of e.g. half the roll diameter from the previous position.

After the quality control actions have been carried out, the sorting stopper flaps allow the rolls remaining there to roll on to position P3. After that, the control unit 14 conveys the rolls to position P4, from where a conveyor C1 transverse to the rolling direction takes the rolls or some of them e.g. to a roll packaging stage.

In a normal situation, the control unit 14 now returns to the beginning of the rolling ramp 2 to receive a new roll set 1. To accelerate the operation, the power means 15, e.g. pneumatic cylinders, raise the bracket 4 to a high position. Thus, it will not hit any rolls that may still remain on the conveyor C1 during the return movement.

In the following situations, the control unit 14 will continue conveying the rolls further. Rolls rejected by quality control are conveyed to position P5, from where they are taken to a chopper by conveyor C2. When the packaging station/stations is/are not in operation, conveyor C1 can not receive any rolls. In this case, it is advantageous to put the rolls in an intermediate storage e.g. by conveying them to the lower end of the ramp, where the power means 15 raise the bracket 4 together with the contact element 3 to position P6. The rolls are thus allowed to roll on, and they will be stored by conventional methods. The control unit 14 now returns to the upper end of the ramp to position P7 and the power means 15 lower the bracket 4 together with the contact element 3 to the low position to receive the next roll set 1.

When the rolls are to be returned from the intermediate storage, they are rolled into the working area of the control unit 14, e.g. onto a horizontal part L of the ramp. The contact element 3 waiting at position P6 is lowered and the control unit 14 pushes the rolls onto conveyor C1.

Depending on the layout, it may be possible to utilize conveyor C2 as well for intermediate storage. When rolls are returned, the control unit 14 pushes the rolls coming from the intermediate storage from conveyor C2 onto conveyor C1.

In the embodiment described, it is also possible to form roll sets with a changed order of rolls. To achieve this, rolls are admitted past the sorting stopper array S in a desired order, and the control unit 14 brings them onto conveyor C1, to be conveyed further in the transverse direction. If conveyor C1 is a single flat-top conveyor, there are limited possibilities of forming tight roll sets to be packaged. In this case it is possible to utilize conveyor C2 to convey desired rolls in the direction of motion of the conveyor to desired positions, from where they are pushed by the control unit 14 onto conveyor C1.
The invention can be implemented as various different embodiments.

The contact element 3 may consist of rubber or plastic coated rollers 17 as are generally used in roll pushing/receiving devices, the rollers forming a row of a length about equal to that of the roll set 1.

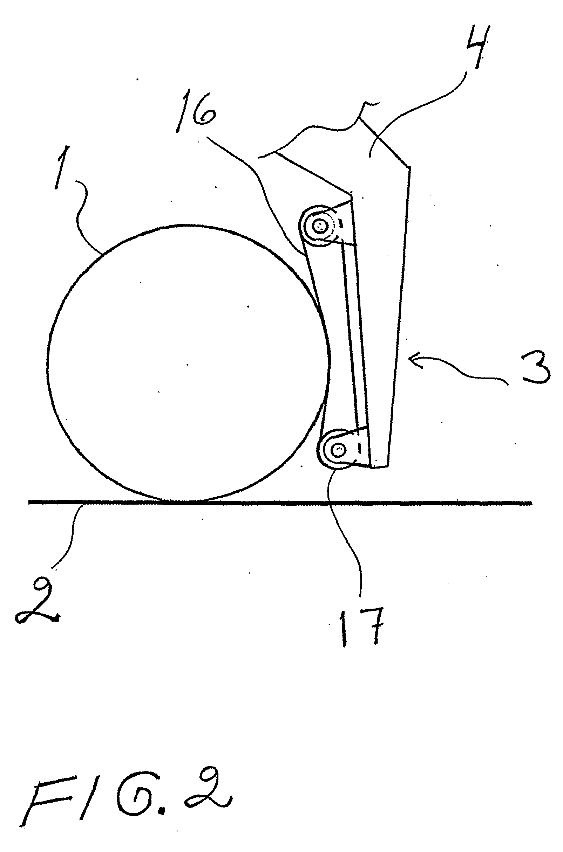

In the embodiment illustrated in Fig. 2, the contact element 3 comprises a belt 16 passed around rollers 17. Alternatively, several belts 16 are placed side by side. With this solution, a very gentle contact with the paper roll 1 is achieved, which is advantageous in the handling of particularly sensitive paper sorts.

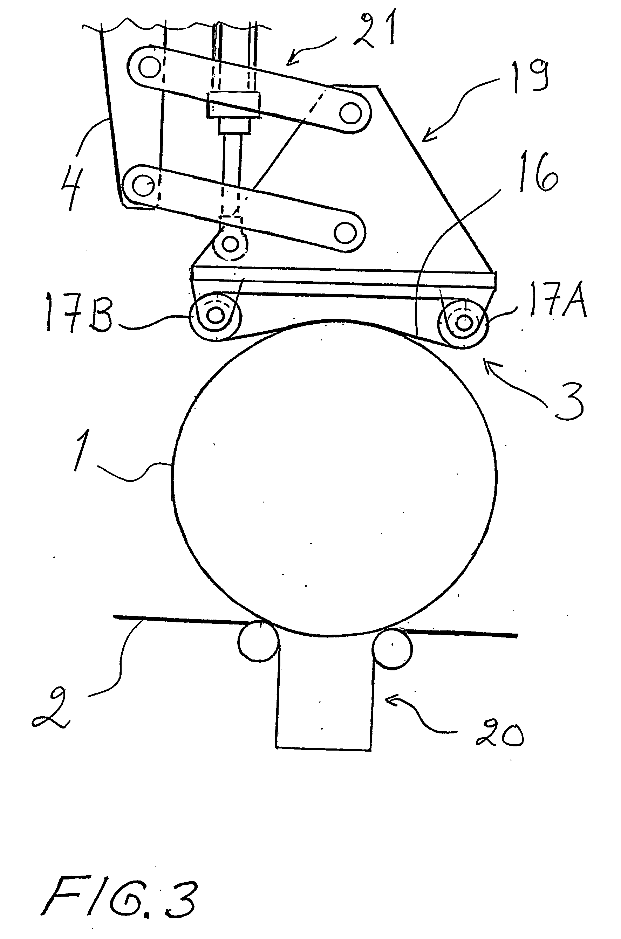

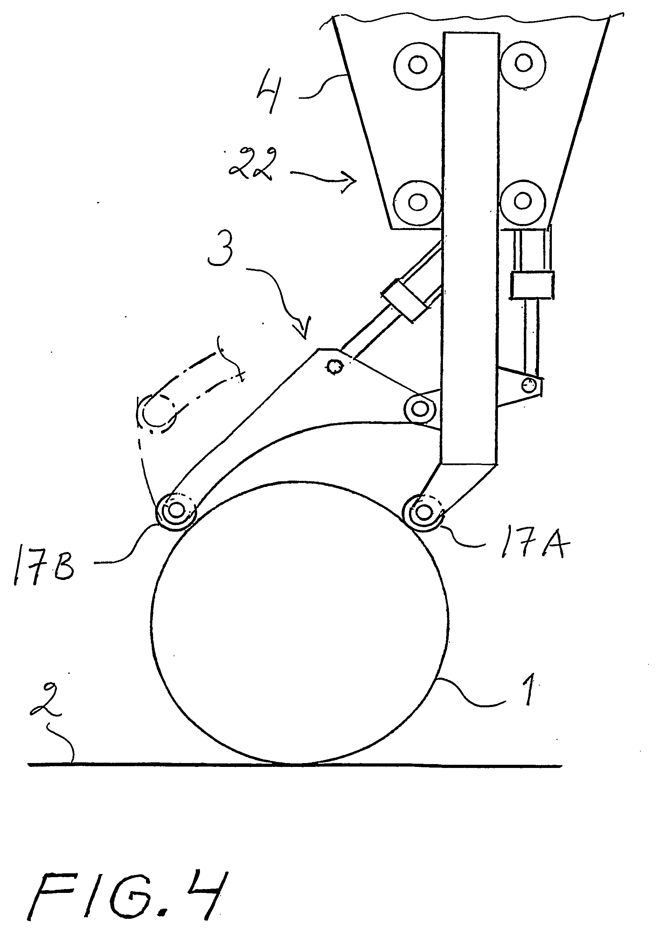

The embodiments illustrated in Fig. 3 and 4 are advantageous in the handling of particularly narrow rolls 1 of disc-like shape, which tend to tumble over during the rolling.

It is also possible to move the rolls over recesses below the ramp level, such as the spaces 20 for carriage conveyors and other obstructions. In these cases it is advantageous to have a contact element 3 that can engage the roll set 1 from the opposite side, too, in which case the rolling ramp may even be horizontal.

Especially the embodiment presented in Fig. 3 can also be implemented as a divided structure comprising several contact units 19 placed side by side. These are provided with separate power means / motion mechanisms 21, which can be implemented using any of several known alternatives.

A divided embodiment is especially applicable in cases where it is necessary to change the order of the rolls relative to each other. In this way, it is possible to bring under control only the rolls directly below selected contact units 19.

In a solution (not shown) alternative to that presented in Fig. 3, the belt 16 is omitted. In this case, the rollers 17A and 17B form the contact element 3.

In the embodiment presented in Fig. 4, one roller 17B has been arranged to be movable relative to the other roller 17A. This provides the possibility that, when roller 17B gives way, roller 17A can receive the roll set 1, whereas during the conveying movement roller 17B is pressed against the roll set 1. The equipment 22 used to raise the contact element 3 is of known construction.

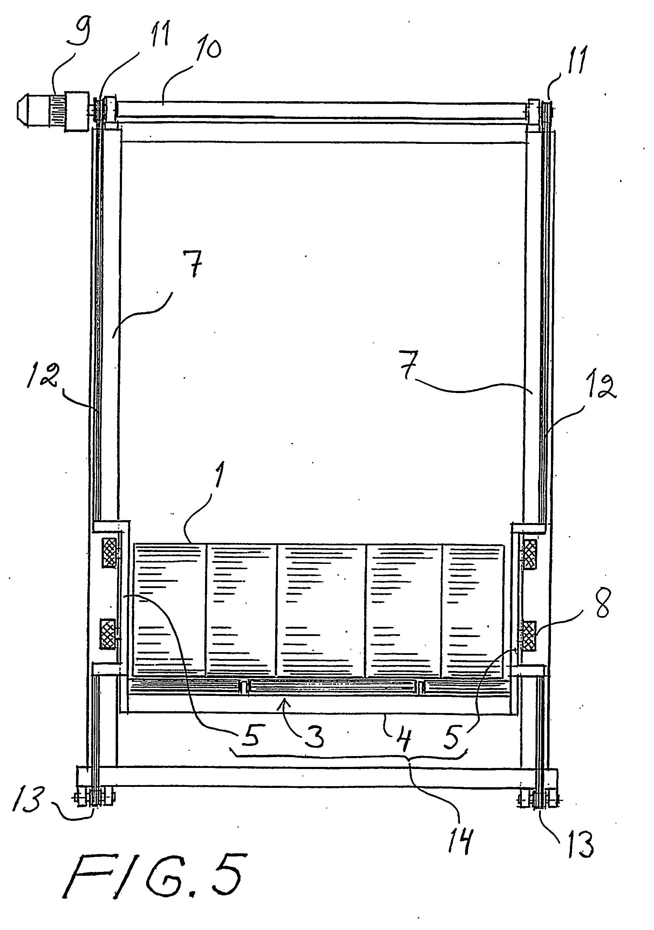

The control unit 14 can also be implemented as a simpler solution in which the bracket 4 is not pivoted on the carriages 5 but is fixedly connected to them (Fig. 5). This is possible in smaller systems where the return movement of the control unit 14 can be delayed until the rolls have been moved away.

In some applications, e.g. after a long rolling movement, the roll set 1 may meet the contact element 3 in an oblique position. As the receiving/damping action occurs over a long distance, this is generally no problem. However, in the case of a long roll set 1, it may be advantageous in extreme cases to adapt the alignment of the contact element 3 with the direction of the outer surface of the roll set 1 when receiving the rolls. This adaptation is achieved by providing each carriage 5 with a separate power means 9 and power transmission 11, 12, 13. The common long shaft 10 is replaced by two short ones. The joints 6 are of a spherical structure. The alignment of the contact element 3 is adjusted at a suitable point during the operating cycle by a known method, by driving the carriages 5 past calibrating sensors and making the required corrections via the control system.

The control system is preferably built on the basis of a programmable logic.

Other implementations of the invention are also possible. In addition to the winder/packaging environment, the invention can be applied in many other sections in a paper and cardboard factory. In addition, the invention can also be used in the handling of non-woven fabric rolls and equivalent.

## Claims

1. Method for conveying paper, pulp or cardboard rolls or a set (1) of such rolls by means of a contact element/contact elements (3) leaning against the outer surface of the rolls, by rolling them along a rolling ramp (2) comprising at least two stop positions or, along a distance of controlled movement of several meters, at least one stop position, **characterized in that**
the rolls / roll set (1) are/is controlled by means of a control unit (14) disposed above the rolling ramp and moving in the rolling area substantially in the direction of the rolling ramp (2), said control unit comprises said contact elements (3) and by means of which the rolls / roll set can be set in motion, stopped and conveyed between stop positions under continuous control, and that
the contact element / contact elements (3) can be moved completely or partly above the rolls (1).

2. Method according to claim 1 for controlling the rolling speed of a rolling roll / roll set (1), **characterized in that** the control unit (14) recedes during the receiving process at a speed lower than the rolling speed of the roll / roll set (1), decelerating the roll / roll set (1) by braking gently, stops it at a first stop position and continues from there to a second stop position and possibly further to subsequent stations, in such manner that the rolling between each two successive stop positions is performed by accelerating during the former part of the rolling distance and decelerating during its latter part so that the contact element (3) never exerts a force on the roll / roll set (1) that would suffice to damage it.

3. Method according to claim 1 for conveying a roll set (1) which has been moved from a winder to the rolling ramp (2) and is rolling along it, c**haracterized in that** the roll set (1) is received by the control unit (14) receding substantially in the direction of the rolling ramp at a speed lower than the rolling speed of the roll set, decelerating down to a halt when necessary at a sorting stopper (S), where selected rolls are left at the sorting stopper (3) and the control unit (14) moves on along the rolling ramp (2) together with the rolls permitted to pass the sorting stopper (S) to the next stop position.

4. Method according to any one of the preceding claims, **characterized in that** the rolls / roll set (1) are/is rolled by means of the control unit (14) both in one rolling direction of the rolling ramp (2) and in the opposite direction.

5. Apparatus for conveying paper, pulp or cardboard rolls or a set (1) of such rolls by means of a contact element/contact elements (3) leaning against the outer surface of the rolls, by rolling them along a rolling ramp (2) comprising at least two stop positions or, along a distance of controlled movement of several meters, at least one stop position, **characterized in that**
the apparatus comprises a control unit (14) disposed above the rolling ramp, said control unit controlling the rolling speed of the rolls / roll set (1) and comprising said contact elements, said control unit moving along guide beams (7) preferably placed substantially above the rolls and extending in the direction of the rolling ramp (2), and **in that** said
contact element / contact elements (3) can be moved completely or partly above the rolls (1).

6. Apparatus according to claim 5, **characterized in that** those parts of the contact element (3) which lean against the rolls / roll set (1) are rollers (17) coated with elastic material.

7. Apparatus according to any one of claims 5-6, **characterized in that** those parts of the contact element (3) which lean against the rolls / roll set (1) are belts (16).

8. Apparatus according to any one of claims 5-7, **characterized in that** the contact element (3) leans against the outer surface of the rolls / roll set (1) on both sides of its highest point.

## Patentansprüche

1. Verfahren zum Fördern von Papier-, Halbstoff- oder Kartonrollen oder eines Satzes (1) solcher Rollen mit Hilfe eines Kontaktelements/Kontaktelementen (3), die an der äußeren Oberfläche der Rollen anliegen, indem man sie entlang einer Roll-Rampe (2) rollt, die mindestens zwei Stopp-Positionen, oder entlang einer Entfernung einer gesteuerten Bewegung von mehreren Metern in mindestens eine Stopp-Position aufweist, **dadurch gekennzeichnet, dass** die Rollen/der Rollensatz (1) gesteuert werden/wird mit Hilfe einer Steuereinheit (14), die oberhalb der Roll-Rampe angeordnet ist und sich im Rollbereich im Wesentlichen in der Richtung der Roll-Rampe (2) bewegt, wobei die Steuereinheit die Kontaktelemente (3) aufweist und mit deren Hilfe die Rollen/den Rollensatz in Bewegung versetzen, stoppen und fördern kann zwischen Stopp-Positionen unter fortlaufender Steuerung, und dass das Kontaktelement/die Kontaktelemente (3) vollständig oder teilweise oberhalb der Rollen (1) bewegt werden können.

2. Verfahren nach Anspruch 1 zum Steuern der Rollgeschwindigkeit einer rollenden Rolle/Rollensatzes (1), **dadurch gekennzeichnet, dass** die Steuereinheit (14) während des Aufnahmeprozesses mit einer Geschwindigkeit zurückweicht, die niedriger ist als die Rollgeschwindigkeit der Rollen/des Rollensatzes (1), die Rolle/des Rollensatzes (1) abbremst durch sanftes Bremsen, sie/ihn an einer ersten Stopp-Position stoppt und von da zu einer zweiten Stopp-Position und möglicherweise weiter zu nachfolgenden Stationen fortsetzt, in solch einer Art, dass das Rollen zwischen jeweils zwei aufeinander folgende Stopp-Positionen durchgeführt wird durch Beschleunigen während des ersten Teils der Rollentfernung und Abbremsung während des letzten Teils, so dass das Kontaktelement (3) niemals eine Kraft auf die Rolle/den Rollensatz (1) ausübt, die ausreichen würde, um sie/ihn zu beschädigen.

3. Verfahren nach Anspruch 1 zum Befördern eines Rollensatzes (1), der von einem Wickler zu der Rollen-Rampe (2) bewegt worden ist und entlang von ihr rollt, **dadurch gekennzeichnet, dass** der Rollensatz (1) empfangen wird durch die Steuereinheit (14), die im Wesentlichen in der Richtung der Roll-Rampe zurückweicht mit einer Geschwindigkeit, die kleiner ist als die Rollgeschwindigkeit des Rollensatzes, zu einem Halt heruntergebremst wird, wenn notwendig an einem Sortier-Stopper (S), wo ausgewählte Rollen an dem Sortier-Stopper (3) gelassen werden und die Steuereinheit (14) sich weiter bewegt entlang der Roll-Rampe (2) zusammen mit den Rollen, denen erlaubt worden ist, am Sortier-Stopper (S) vorbei zu laufen zu der nächsten Stopp-Position.

4. Verfahren nach einem der vorangehenden Ansprüche, **dadurch gekennzeichnet, dass** die Rollen/der Rollensatz (1) gerollt werden/wird mit Hilfe der Steuereinheit (14) sowohl in eine Rollrichtung der Roll-Rampe, als auch in die entgegengesetzte Richtung.

5. Vorrichtung zum Fördern von Papier-, Halbstoff-oder Kartonrollen oder einem Satz (1) solcher Rollen mit Hilfe eines Kontaktelements/ Kontaktelementen (3), die an der äußeren Oberfläche der Rollen anliegen, indem sie entlang einer Roll-Rampe (2) gerollt werden, die mindestens zwei Stopp-Positionen oder entlang einer Entfernung von gesteuerter Bewegung über mehrere Meter mindestens eine Stopp-Position aufweist, **dadurch gekennzeichnet, dass** die Vorrichtung eine Steuereinheit (14) aufweist, die oberhalb der Roll-Rampe angeordnet ist, wobei die Steuereinheit die Rollgeschwindigkeit der Rollen/des Rollensatzes (1) steuert und die Kontaktelemente aufweist, wobei die Steuereinheit sich entlang von Führungsträgern (7) bewegt, die vorzugsweise im Wesentlichen oberhalb der Rollen angeordnet sind und sich in der Richtung der Roll-Rampe (2) erstrecken, und dass das Kontaktelement/die Kontaktelemente (3) vollständig oder teilweise oberhalb der Rollen (1) bewegt werden können.

6. Vorrichtung nach Anspruch 5, **dadurch gekennzeichnet, dass** diejenigen Teile der Kontaktelemente (3), die an den Rollen/dem Rollensatz (1) anliegen, Rollen (17) sind, die mit einem elastischen Material beschichtet sind.

7. Vorrichtung nach einem der Ansprüche 5 bis 6, **dadurch gekennzeichnet, dass** diejenigen Teile der Kontaktelemente (3), die an den Rollen/dem Rollensatz (1) anliegen, Bänder (16) sind.

8. Vorrichtung nach einem der Ansprüche 5 bis 7, **dadurch gekennzeichnet, dass** das Kontaktelement (3) mit der äußeren Oberfläche der Rollen/des Rollensatzes (1) auf beiden Seiten seines höchsten Punkts in Kontakt steht.

## Revendications

1. Procédé pour transporter des rouleaux de papier, pâte ou carton ou un jeu (1) de tels rouleaux au moyen d'un élément de contact/d'éléments de contact (3) prenant appui contre la surface extérieure des rouleaux, en le/les faisant rouler le long d'une rampe de roulement (2) comprenant au moins deux positions d'arrêt ou, le long d'une distance de mouvement contrôlée de plusieurs mètres, au moins une position d'arrêt, **caractérisé en ce que**
les rouleaux/le jeu de rouleaux (1) sont/est contrôlé(s) au moyen d'une unité de contrôle (14) disposée au-dessus de la rampe de roulement et se déplaçant dans la zone de roulement sensiblement dans la direction de la rampe de roulement (2), ladite unité de contrôle comprend lesdits éléments de contact (3) et au moyen de laquelle les rouleaux/le jeu de rouleaux peuvent/peut être mis en mouvement, arrêté(s) et transporté(s) entre des positions d'arrêt sous contrôle continu, et que
l'élément de contact/les éléments de contact (3) peut/peuvent être déplacé(s) complètement ou partiellement au-dessus des rouleaux (1).

2. Procédé selon la revendication 1 pour contrôler la vitesse de roulement d'un rouleau/jeu de rouleaux de roulement (1), **caractérisé en ce que** l'unité de contrôle (14) recule au cours du processus de réception à une vitesse inférieure à la vitesse de roulement du rouleau/jeu de rouleaux (1), ralentissant le rouleau/jeu de rouleaux (1) en freinant doucement, l'arrête dans une première position d'arrêt et continue à partir de là jusqu'à une seconde position d'arrêt et éventuellement davantage jusqu'à des postes subséquents, de manière telle que le roulement entre chaque paire de positions d'arrêt successives soit réalisé en accélérant au cours de la première partie de la distance de roulement et en ralentissant au cours de la seconde partie de sorte que l'élément de contact (3) n'exerce jamais de force sur le rouleau/jeu de rouleaux (1) qui suffirait pour l'endommager.

3. Procédé selon la revendication 1 pour transporter un jeu de rouleaux (1) qui a été déplacé d'un enrouleur à la rampe de roulement (2) et roule le long de celle-ci, **caractérisé en ce que** le jeu de rouleaux (1) est reçu par l'unité de contrôle (14) reculant sensiblement dans la direction de la rampe de roulement à une vitesse inférieure à la vitesse de roulement du jeu de rouleaux, ralentissant jusqu'à l'arrêt lorsque cela est nécessaire au niveau d'une butée de triage (S), où des rouleaux sélectionnés sont laissés au niveau de la butée de triage (3) et l'unité de contrôle (14) continue de se déplacer le long de la rampe de roulement (2) conjointement aux rouleaux autorisés à passer au-delà de la butée de triage (S) jusqu'à la position d'arrêt suivante.

4. Procédé selon l'une quelconque des revendications précédentes, **caractérisé en ce que** les rouleaux/le jeu de rouleaux (1) roulent/roule au moyen de l'unité de contrôle (14) à la fois dans une direction de roulement de la rampe de roulement (2) et dans la direction opposée.

5. Appareil pour transporter des rouleaux de papier, pâte ou carton ou un jeu (1) de tels rouleaux au moyen d'un élément de contact/d'éléments de contact (3) prenant appui contre la surface extérieure des rouleaux, en le/les faisant rouler le long d'une rampe de roulement (2) comprenant au moins deux positions d'arrêt ou, le long d'une distance de mouvement contrôlée de plusieurs mètres, au moins une position d'arrêt, **caractérisé en ce que**
l'appareil comprend une unité de contrôle (14) disposée au-dessus de la rampe de roulement, ladite unité de contrôle contrôlant la vitesse de roulement des rouleaux/du jeu de rouleaux (1) et comprenant lesdits éléments de contact, ladite unité de contrôle se déplaçant le long de poutres de guidage (7) de préférence placées sensiblement au-dessus des rouleaux et s'étendant dans la direction de la rampe de roulement (2), et **en ce que**
ledit élément de contact/lesdits éléments de contact (3) peut/peuvent être déplacé(s) complètement ou partiellement au-dessus des rouleaux (1).

6. Appareil selon la revendication 5, **caractérisé en ce que** ces parties de l'élément de contact (3) qui prennent appui contre les rouleaux/le jeu de rouleaux (1) sont des rouleaux (17) enduits avec un matériau élastique.

7. Appareil selon l'une quelconque des revendications 5 et 6, **caractérisé en ce que** ces parties de l'élément de contact (3) qui prennent appui contre les rouleaux/le jeu de rouleaux (1) sont des courroies (16).

8. Appareil selon l'une quelconque des revendications 5 à 7, **caractérisé en ce que** l'élément de contact (3) pend appui contre la surface extérieure des rouleaux/du jeu de rouleaux (1) sur les deux côtés de son point le plus haut.
